# EUROPEAN PATENT APPLICATION

(11) **EP 4 458 782 A1**
(43) Date of publication of application: **06.11.2024**
(21) Application number: 23835652.1
(22) Date of filing: 13.04.2023
(51) Int. Cl.: C03C 10/00, C03C 21/00, C03C 15/00, H05B 6/12, H05B 6/44

(54) **TOP PLATE FOR COOKING APPLIANCE, GLASS CERAMIC SUBSTRATE PROCESSING METHOD, AND APPARATUS COMPRISING SAME**

(30) Priority: 08.07.2022 KR 20220084673
(71) Applicant: SAMSUNG ELECTRONICS CO., LTD., Yeongtong-gu Suwon-si, Gyeonggi-do 16677 (KR)
(72) Inventor: KIM, Hyungin, Suwon-si Gyeonggi-do 16677 (KR); SONG, Jiyoung, Suwon-si Gyeonggi-do 16677 (KR); KOH, Youngdeog, Suwon-si Gyeonggi-do 16677 (KR); KIM, Kwangjoo, Suwon-si Gyeonggi-do 16677 (KR)
(74) Representative: Gulde & Partner
(86) International application number: PCT/KR2023/004975
(87) International publication number: WO 2024/010183

(57) **Abstract**

A cooking apparatus top plate includes a glass ceramic substrate having a chemically strengthened uneven structure with an average surface roughness Ra of 0.1 to 1.0 µm. A cooking vessel is placeable on the top plate to be heating by the cooking apparatus. A method for processing a glass ceramic substrate includes forming a top surface to have an uneven structure and chemically strengthening the top surface that has the uneven structure. An induction heating apparatus includes a cooking apparatus top plate and a plurality of induction heating coils for heating the cooking vessel placed on the top plate.

## Description

### [Technical Field]

The present disclosure relates to a cooking apparatus top plate with high strength and low gloss having an uneven structure with a preset surface roughness on the surface, a method for manufacturing the same, and an apparatus including the same.

### [Background Art]

Induction heating apparatuses are cooking apparatuses used to heat and cook food by using the principle of induction heating. An induction heating apparatus includes a cooking apparatus top plate on which cooking vessels are placed and an induction coil configured to generate a magnetic field by a current applied thereto.

A magnetic field generated by a current supplied to a coil induces a secondary current, and thus Joule heat is generated by a resistance component of a cooking vessel. Therefore, the cooking vessel is heated by a high-frequency current and food contained in the cooking vessel is cooked.

While a thermal efficiency (for heating a cooking vessel) of a gas stove is about 45%, an induction heating apparatus having a high thermal efficiency of about 90% may reduce cooking time.

In addition, because a cooking vessel itself is used as a heat source in an induction heating apparatus, the induction heating apparatus does not generate harmful gases, is safe with no risk of fire, and is easy to clean due to non-stick property, compared to gas stoves or kerosene cookers that heat a cooking vessel using heat obtained by burning fossil fuels, and thus the recent market for induction heating apparatuses is expanding.

Meanwhile, although the top plate of induction heating apparatuses is formed of a tempered glass such as glass ceramic to prevent breakage of the top plate caused by frequent friction with a cooking vessel, scratches are formed in the case where a load is applied thereto at a high temperature. Once scratches are formed, a contaminant is inserted into the scratches causing a problem in deteriorating cleanability and aesthetic property. Therefore, there is a need to develop a material used to form the top plate with improved scratch resistance as well as high strength.

### [Disclosure]

### [Technical Problem]

Provided are a high-strength and low-gloss glass ceramic substrate having improved scratch resistance and increased surface hardness with reduced friction coefficient by forming an uneven structure satisfying a preset surface roughness on the surface of the glass ceramic and chemically strengthening the surface, and a method for manufacturing the same. The glass ceramic substrate may be applied to exterior cooking apparatus top plates requiring heat resistance or exterior materials requiring scratch resistance.

However, the technical problems to be solved by the present disclosure are not limited to the aforementioned problems, and any other technical problems not mentioned herein will be clearly understood from the following description by those skilled in the art to which the present disclosure pertains.

### [Technical Solution]

In accordance with an aspect of the present disclosure, a cooking apparatus includes a glass ceramic substrate having a chemically strengthened top surface that has an uneven structure with an average surface roughness Ra of 0.1 to 1.0 µm.

In addition, the glass ceramic substrate may include lithium aluminosilicate-based crystalline glass including Li₂O, Al₂O₃ and SiO₂ as a basic composition. The glass ceramic substrate may include at least one crystal phase selected from β-quartz, β-spodumene, and β-eucryptite crystal phases. The glass ceramic substrate may further include at least one element selected from the group consisting of V, Mg, P, Fe, Ti and Zr.

In addition, the surface of the glass ceramic substrate may be chemically strengthened by ion exchange with at least one strengthening salt selected from KNOs and NaNOs

In addition, the glass ceramic substrate may have a Vickers hardness of 950 to 1,200 Hv. The glass ceramic substrate may have a friction coefficient of 0.42 to 0.71.

In addition, the cooking apparatus top plate further includes a printed layer under the glass ceramic substrate. The printed layer may include a background printed layer and a shielding printed layer under the background printed layer.

In accordance with another aspect of the present disclosure, a method for processing a glass ceramic substrate having a top surface may be provided. The method includes: forming the top surface so as to have an uneven structure having an average surface roughness Ra of 0.1 to 1.0 µm; and chemically strengthening the top surface having the uneven structure.

In addition, the glass ceramic substrate may include lithium aluminosilicate-based crystalline glass including Li₂O, Al₂O₃ and SiO₂ as a basic composition. The glass ceramic substrate may include at least one crystal phase selected from β-quartz, β-spodumene, and β-eucryptite crystal phases. The glass ceramic substrate may further include at least one element selected from the group consisting of V, Mg, P, Fe, Ti, Cr, and Zr.

In addition, the forming of the top surface so as to have the uneven structure may be performed by chemical etching, blasting, or a combination thereof.

In addition, the chemical strengthening is performed by ion exchange with at least one strengthening salt selected from KNOs and NaNOs. The chemical strengthening may be performed for 10 to 60 minutes using a KNOs solution having a concentration of 90 to 100 wt% as a strengthening salt.

In accordance with another aspect of the present disclosure, an induction heating apparatus may be provided. The induction heating apparatus includes: a cooking apparatus top plate on which a cooking vessel is placeable, the cooking apparatus top plate including a glass ceramic substrate having a chemically strengthened top surface that has an uneven structure with an average surface roughness Ra of 0.1 to 1.0 µm; and a plurality of induction heating coils under the cooking apparatus top plate and configured to, with the cooking vessel placed on the top surface, generate magnetic fields to heat the cooking vessel.

In addition, the glass ceramic substrate may include lithium aluminosilicate-based crystalline glass including Li₂O, Al₂O₃ and SiO₂ as a basic composition. The glass ceramic substrate may include at least one crystal phase selected from β-quartz, β-spodumene, and β-eucryptite crystal phases.

In addition, the glass ceramic substrate may have a Vickers hardness of 950 to 1,200 Hv and a friction coefficient of 0.42 to 0.71.

### [Advantageous Effects]

According to an embodiment of the present disclosure, a crystalline cooking apparatus top plate having high hardness and low gloss is provided, specifically, by forming an uneven structure with a preset range of surface roughness on a surface of a glass ceramic substrate used in an environment requiring heat resistance, such as in an induction range, a friction coefficient and occurrence of scratches caused by friction of kitchenware may be reduced.

In addition, the uneven surface makes the substrate translucent to reduce visibility of the substrate such that the internal structure of a cooking apparatus such as induction heating coils is not visible from the outside, thereby providing aesthetic appearance.

In addition, a cooking apparatus top plate having further improved surface strength and hardness may be provided by chemically strengthening the surface of the uneven structure of the ceramic substrate.

In addition, the glass ceramic substrate may be applied to a characteristic design of exterior materials such as mobile back cover glass, refrigerators, and the like, as well as the cooking apparatus top plate such as induction ranges due to the unique surface texture with the uneven structure on the surface.

However, the effects obtainable by the present disclosure are not limited to the aforementioned effects, and any other effects not mentioned herein will be clearly understood from the following description by those skilled in the art to which the present disclosure pertains.

### [Description of Drawings]

FIG. 1 is a cross-sectional view illustrating a structure of a cooking apparatus top plate according to an embodiment of the present disclosure.
FIG. 2 is a cross-sectional view illustrating a structure of a cooking apparatus top plate according to an embodiment of the present disclosure and an exploded view of an uneven structure.
FIG. 3 is an exploded view illustrating chemical strengthening in an uneven structure (region A of FIG. 2) of a cooking apparatus top plate according to an embodiment of the present disclosure.
FIG. 4 is a view illustrating an external appearance of an induction heating apparatus according to an embodiment of the present disclosure.
FIG. 5 is a view illustrating a state where a main body is separated from a cooking apparatus top plate in an induction heating apparatus.
FIG. 6 is an exploded perspective view illustrating a structure of a cooking apparatus top plate and an induction heating coil of an induction heating apparatus according to an embodiment of the present disclosure.
FIG. 7A is a photograph of an induction range including a conventional cooking apparatus top plate on which an uneven structure is not formed.
FIG. 7B is a photograph of an induction range including a glass ceramic substrate on which an uneven structure according to an embodiment of the present disclosure is formed.
FIG. 8A is a graph illustrating friction coefficients of a conventional glass ceramic substrate on which an uneven structure is not formed under a measurement load of 5 N.
FIG. 8B is a graph illustrating friction coefficients of a glass ceramic substrate on which an uneven structure according to an embodiment of the present disclosure is formed under a measurement load of 5 N.
FIG. 9A is a graph illustrating friction coefficients of a conventional glass ceramic substrate on which an uneven structure is not formed under a measurement load of 2 N.
FIG. 9B is a graph illustrating friction coefficients of a glass ceramic substrate on which an uneven structure according to an embodiment of the present disclosure is formed under a measurement load of 2 N.
FIG. 10 is a graph illustrating surface hardness with respect to conditions for chemically strengthening a glass ceramic substrate.
FIG. 11 is a graph illustrating friction coefficients with respect to surface roughness of a glass ceramic substrate.
FIG. 12 is a graph illustrating surface hardness with respect to chemical strengthening time.

### [Modes of the Invention]

Hereinafter, embodiments of the present disclosure will be described in detail. The present disclosure may, however, be embodied in many different forms and should not be construed as limited to the exemplary embodiments set forth herein; rather, these embodiments are provided so that this disclosure will be thorough and complete, and will fully convey the concept of the disclosure to those of ordinary skill in the art.

Also, the terms used in the present disclosure are merely used to describe particular embodiments. An expression used in the singular encompasses the expression of the plural, unless it has a clearly different meaning in the context.

In addition, it is to be understood that the terms such as "including" or "having", etc., used herein are intended to indicate the existence of the features, operations, functions, components, or combinations thereof disclosed in the specification, and are not intended to preclude the possibility that one or more other features, operations, functions, components, or combinations thereof may exist or may be added.

Meanwhile, unless otherwise defined, all terms used herein have the same meaning as commonly understood by one of ordinary skill in the art to which the present disclosure belongs. Unless clearly defined herein, these terms should not be interpreted in an idealized or overly formal sense. As used herein, singular forms are intended to include the plural forms as well, unless the context clearly indicates otherwise.

The terms "about", "substantially", etc. used throughout the specification means that when a natural manufacturing and a substance allowable error are suggested, such an allowable error corresponds the value or is similar to the value, and such values are intended for the sake of clear understanding of the present disclosure or to prevent an unconscious infringer from illegally using the disclosure of the present disclosure.

In addition, terms "first ", "second", etc., are used to distinguish one component from other components and, therefore, the components are not limited by the terms.

In addition, the terms "unit", "device", "block", "member", and "module" refer to a unit used to process at least one function or operation.

Hereinafter, embodiments of the present disclosure will be described in detail with reference to the accompanying drawings. In the drawings, like reference numerals will be assigned to like elements or components having substantially same functions.

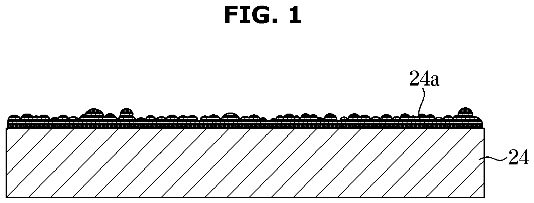

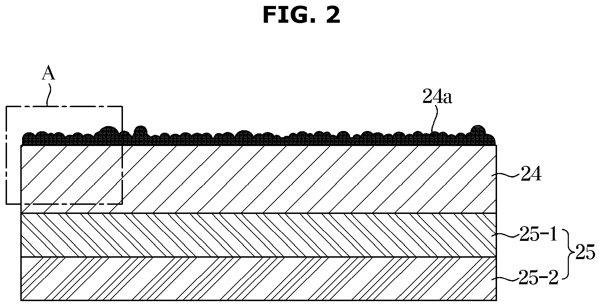

FIGS. 1 and 2 are cross-sectional views illustrating a structure of a cooking apparatus top plate according to an embodiment of the present disclosure.

Hereinafter, a cooking apparatus top plate and a processing method of the glass ceramic substrate will be described in detail with reference to FIGS. 1 and 2.

Referring to FIGS. 1 and 2, a cooking apparatus top plate 20 includes a glass ceramic substrate 24 having a chemically strengthened uneven structure 24a on the top surface.

According to an embodiment of the present disclosure, lithium aluminosilicate-based crystalline glass including Li₂O, Al₂O₃ and SiO₂ as a basic composition may be used in the glass ceramic substrate 24 for heat resistance. In addition, the glass ceramic substrate 24 may further include at least one element selected from the group consisting of V, Mg, P, Fe, Ti, Cr, and Zr according to the color to be implemented, but is not limited thereto. More specifically, the implemented color may vary according to the contents of the elements contained in the implemented glass ceramic substrate 24, and the V content may be increased to realize black color and the contents of P, Zr, and the like may be increased to realize white color.

In addition, the glass ceramic substrate may include at least one crystal phase selected from β-quartz, β-spodumene, and β-eucryptite crystal phases.

The crystal phase of the glass ceramic substrate 24 may vary according to crystallization temperature, and the color of the glass ceramic substrate 24 may vary according to the crystal phase. For example, the glass ceramic substrate 24 may include at least one crystal phase selected from β-quartz, β-spodumene, and β-eucryptite crystal phases. More specifically, a glass ceramic including the β-quartz crystal phase may implement transparent color, and a glass ceramic including the β-spodumene crystal phase may implement white color.

Referring to FIGS. 1 and 2, the uneven structure 24a is formed on the top surface of the glass ceramic substrate 24 to improve scratch resistance and reduce visibility and friction coefficient. In general, formation of an uneven surface has been known to increase a friction coefficient, but it has been found that the friction coefficient is decreased by adjusting the surface roughness of an uneven structure within a predetermined range in the present disclosure.

According to an embodiment, because the glass ceramic substrate 24 has an average surface roughness Ra in the range of 0.1 to 1.0 µm, preferably, 0.3 to 0.9 µm, due to the uneven structure 24a formed on the surface, the friction coefficient is reduced and scratches and visibility may be reduced. Particularly, in the case where the surface roughness exceeds the upper limit, a higher friction coefficient than that before forming the uneven structure is obtained, and thus the surface roughness may be 1.0 µm or less. Specifically, the friction coefficient of the surface of the glass ceramic substrate before forming the uneven structure is about 0.75 µm, but the friction coefficient may be lowered to a range of 0.42 to 0.71 µm by forming the uneven structure on the surface of the glass ceramic substrate, and accordingly, soft tough may be obtained. In addition, visibility of the cooking apparatus top plate 20 may decrease to become translucent with low gloss to prevent the internal structure of the apparatus from being visible in a region that is difficult to be shielded by a printed layer to be described below.

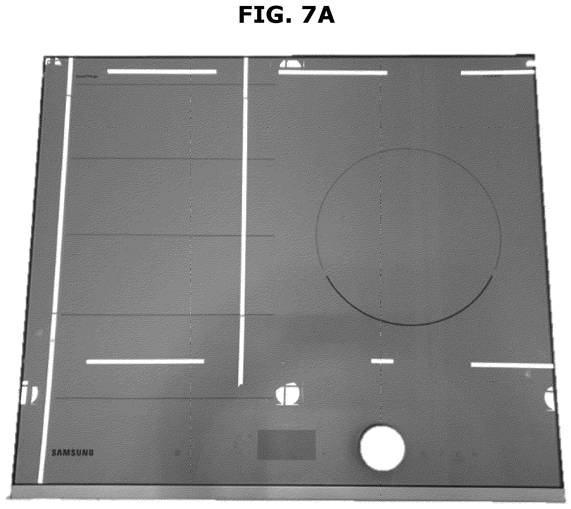

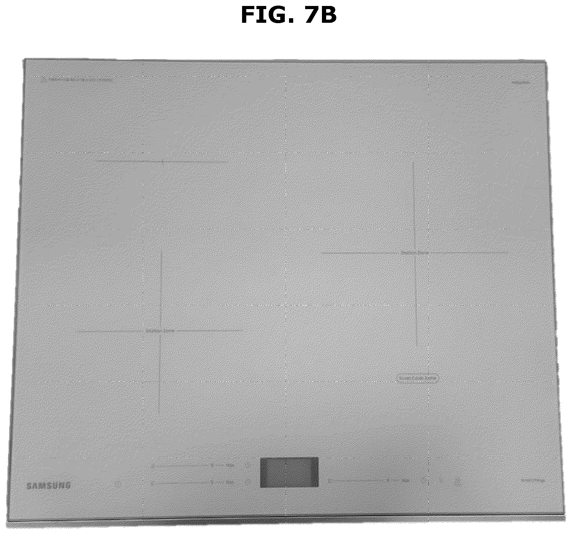

FIG. 7A shows a cooking apparatus top plate formed of a glass ceramic substrate on which an uneven structure is not formed. FIG. 7B shows a cooking apparatus formed of a glass ceramic substrate on which an uneven structure is formed. While the glass ceramic substrate on which the uneven structure is not formed has high gloss and visibility as shown in FIG. 7A, the glass ceramic substrate on which the uneven structure is formed has low gloss and visibility as shown in FIG. 7B.

According to an embodiment, the uneven structure 24a may be formed by chemical etching, blasting, or any combination thereof. The chemical etching may be performed by using an acidic solution including fluorine as an etchant, and for example, hydrofluoric acid (HF), fluorosilicic acid (F₆H₂Si) may be used as the etchant, without being limited thereto. The blasting may be performed using particles with high hardness such as boron carbide, industrial diamond, Al₂O₃, silicon carbide, glass bead, zirconia, and stainless shot as a blasting surface treatment medium. In addition, if required, chemical etching and blasting may be performed in combination, for example, chemical etching may further be performed after blasting is performed, but the present disclosure is not limited thereto.

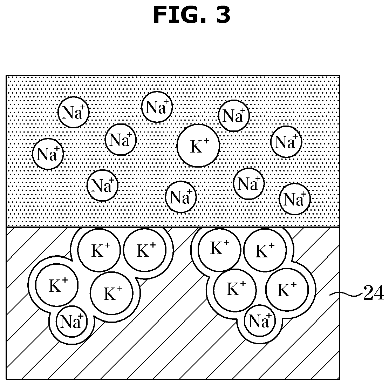

The surface of the glass ceramic substrate 24, on which the uneven structure is formed to improve surface hardness and strength, is chemically strengthened. Chemical strengthening treatment may be performed using at least one strengthening salt selected from KNOs and NaNOs. Specifically, the surface is chemically strengthened via ion exchange between the lithium ions (Li⁺) of the glass ceramic substrate 24 and the cations (K⁺ and/or Na⁺) of the strengthening salt. FIG. 3 is an enlarged view illustrating region A of FIG. 2 showing an ionexchanged state between the glass ceramic substrate 24 and the strengthening salt in the case of chemically strengthening the uneven structure on the surface of the glass ceramic substrate 24 using KNOs.

According to an embodiment, a chemical strengthening process may be performed using 90 to 100 wt% of KNOs, as a strengthening salt, for 10 minutes or more, preferably for 10 to 60 minutes in terms of efficiency and productivity of the process. In the present disclosure, high strength and surface hardness may be obtained even when chemical strengthening is applied for a short time. It has been generally known that a chemical strengthening process should be performed on glass ceramics for about 8 to 24 hours because migration and substitution of ions are interrupted by inner crystallinity. However, because there is no significant difference in surface hardness between long-time chemical strengthening conducted for over 8 hours and short-time chemical strengthening conducted for less than 1 hour, it is desirable to perform short-time chemical strengthening in terms of efficiency and productivity of the process.

Because friction is continuously generated on the top surface of the cooking apparatus top plate 24, it is required to increase surface hardness and strength, particularly, for reducing impact strength and scratches of the surface. Specifically, the glass ceramic substrate 24 may have a Vickers hardness of 950 Hv or more, preferably, 950 to 1,200 Hv, more preferably, 1,000 to 1,200 Hv.

Meanwhile, referring to FIG. 2, a printed layer 25 may further be disposed under the glass ceramic substrate 24 to realize a desired color or prevent the internal structure of an induction range from being visible from the outside.

The printed layer 25 may include a polyester-based polymer material as a base material and further include titanium oxide (TiO₂), silicon oxide (SiO₂), glass beads, Si, Cr, Mg, and the like in accordance with a desired color. A large amount of an inorganic material and a metallic pigment may be added to obtain heat resistance of ink. In addition, cyclohexane, trimethyl benzene, methyl methacrylate, and the like may be used as a solvent and a hardening agent, without being limited thereto.

In an embodiment, the printed layer 25 may include a background printed layer 25-1, for example, the background printed layer 25-1 may be provided under the translucent glass ceramic substrate 24 to differentiate the design by realizing a color visible from the outside or to display a guide mark to guide a user to a position for heating a cooking vessel.

Meanwhile, in another embodiment, a guide mark to guide a user to a position for heating a cooking vessel may be separately formed on the uneven structure 24a of the glass ceramic substrate 24 by glass printing. The glass printing is conducted by applying a design with a glass-printing ink to a glass ceramic and heating the design at a preset temperature such that the ink permeates into the glass ceramic. Any material known as an ink for glass printing may be used in the glass printing, without limitation.

In an embodiment, the printed layer 25 may include a shielding printed layer 25-2. For example, the shielding printed layer 25-2 may be disposed under the background printed layer 25-1 to prevent the internal structure of the apparatus from being visible to a user.
Meanwhile, although surface hardness and scratch resistance may be improved by forming the uneven structure 24a on the surface of the glass ceramic substrate 24, cleanability and antifouling property may slightly deteriorate. Thus, an antifouling layer (not shown) may further be formed on the glass ceramic substrate 24 on which the uneven structure 24a is formed to improve cleanability and antifouling property of the cooking apparatus top plate 20. The antifouling layer may include, for example, an inorganic material such as zirconium oxide (ZrO₂) and titanium oxide (TiO₂) to improve surface slipperiness and heat resistance, but the embodiment is not limited thereto. In addition, the antifouling layer may include an anti-finger printing (AF) coating layer. For example, the anti-finger printing coating layer may have a structure in which perfluoro polyether (PFPE) binds to a silane base used as a coupling agent and may further include an inorganic material for improving heat resistance, such as zirconium oxide (ZrO₂) and titanium oxide (TiO₂).

In an embodiment, the above-described cooking apparatus top plate may be used as a top plate of an induction heating apparatus.

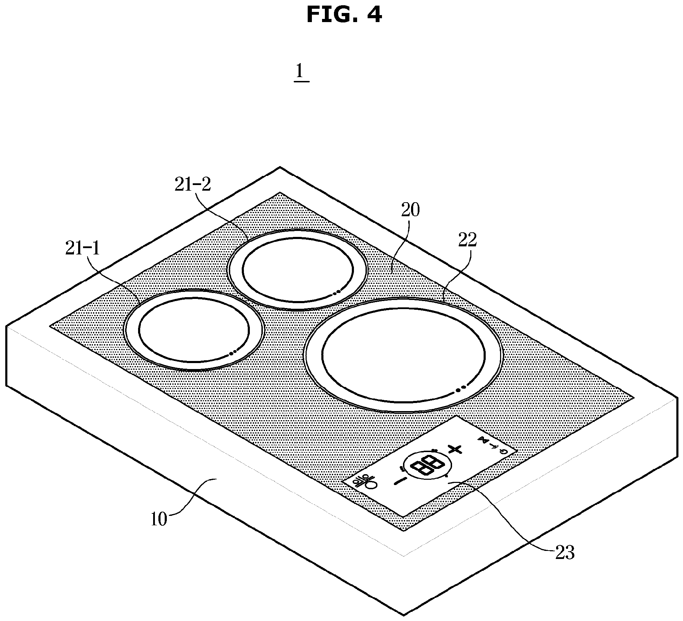

FIG. 4 is a view illustrating an external appearance of an induction heating apparatus according to an embodiment of the present disclosure.

Referring to FIG. 4, an induction heating apparatus 1 includes a main body 10 constituting an external appearance of the induction heating apparatus 1 and used to install various components of the induction heating apparatus 1. The main body 10 may be provided in a box shape with an open top surface.

The cooking apparatus top plate 20 having a flat-panel shape on which a cooking vessel is to be placed may be provided on the top surface of the main body 10.

Conventionally, heat-resistant glass having a lower thermal expansion coefficient than ordinary glass has been used as a material for the top plate of an induction heating apparatus, i.e., the cooking apparatus top plate 20. However, there are limits to design a pattern of transparent heat-resistant glass due to a low degree of freedom in exterior patterns.

Meanwhile, a material applied to the top plate of an induction heating apparatus should have a low thermal expansion coefficient for protection against thermal impact. In the present disclosure, a glass ceramic is used as a substrate to maintain heat resistance required in induction heating apparatuses.

Hereinafter, the glass ceramic substrate 24 and the printed layer 25 constituting the cooking apparatus top plate 20 will be described.

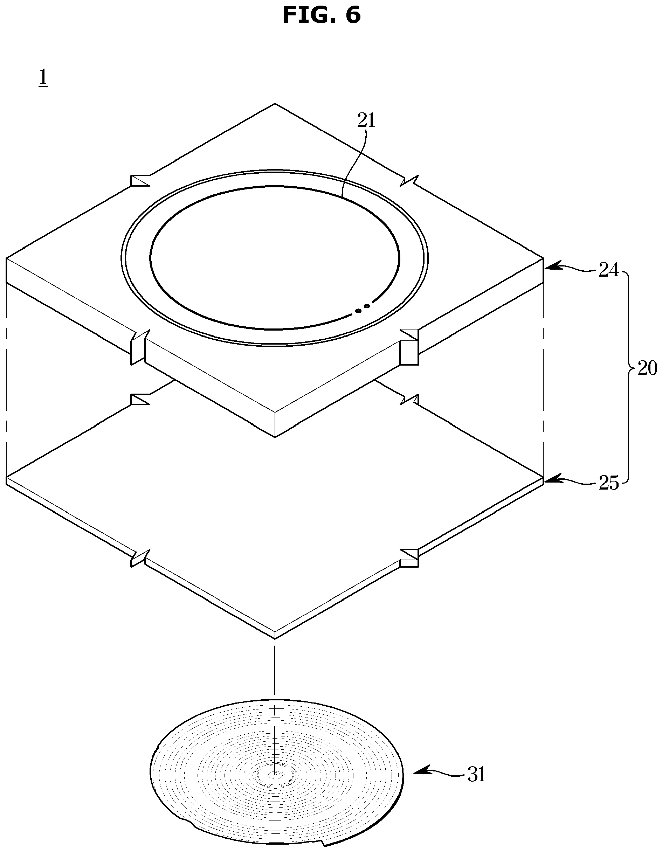

FIG. 6 is an exploded perspective view illustrating a structure of a cooking apparatus top plate and an induction heating coil of an induction heating apparatus according to an embodiment of the present disclosure. Referring to FIG. 6, the printed layer 25 is coupled to the bottom surface of the glass ceramic substrate 24.

The glass ceramic substrate 24 may have a flat-panel shape to allow a cooking vessel to be placed thereon and may be formed of a material with a low thermal expansion coefficient. For example, the glass ceramic substrate 24 may be formed of a material satisfying heat resistance conditions required as a material of a cooking apparatus top plate of an induction heating apparatus.

The glass ceramic substrate 24 includes a chemically strengthened uneven structure 24a on the top surface and the uneven structure 24a has an average surface roughness Ra of 0.1 to 1.0 µm. Descriptions of the glass ceramic substrate 24 are identical to those given above with respect to the cooking apparatus top plate 20 and thus will not be repeated.

Meanwhile, referring to FIG. 2, the printed layer 25 may include the background printed layer 25-1 under the translucent glass ceramic substrate 24 to display a guide mark to differentiate a design by realizing a color visible from the outside or to guide a user to a position for heating a cooking vessel. In addition, the shielding printed layer 25-2 may further be disposed under the background printed layer 25-1 to prevent the internal structure of the apparatus from being visible to the user. Descriptions of the printed layer 25 are identical to those given above with respect to the cooking apparatus top plate and will not be repeated.

According to another embodiment, guide marks 21-1, 21-2, and 22 to guide the user to positions for heating cooking vessels may be additionally formed on the glass ceramic substrate 24 provided with the uneven structure 24a on the top surface thereof. In this regard, the guide marks 21-1, 21-2, and 22 may be formed by glass printing performed by applying a glass-printing ink to the surface of the uneven structure of the glass ceramic substrate 24 in a pattern and heating the pattern at a preset temperature such that the ink permeates into the glass ceramic. In addition, any material known as an ink for glass printing may be used in the glass printing, without limitation.

According to an embodiment, an antifouling layer (not shown) may further be formed on the glass ceramic substrate 24. For example, the antifouling layer may be formed on the glass-printed glass ceramic substrate 24. In the case where the antifouling layer is formed on the glass ceramic substrate 24 on which the uneven structure 24a is formed, cleanability and antifouling property of the cooking apparatus top plate 20 may be improved. For example, the antifouling layer may include an inorganic material such as zirconium oxide (ZrO₂) and titanium oxide (TiO₂) to improve surface slipperiness and heat resistance, but is not limited thereto. In addition, the antifouling layer may include an anti-finger printing (AF) coating layer. For example, the anti-finger printing coating layer may have a structure in which perfluoro polyether binds to a silane base used as a coupling agent, and may further include an inorganic material such as zirconium oxide (ZrO₂) and titanium oxide (TiO₂) to improve heat resistance.

Hereinafter, three guide marks will be described, but the number of the guide marks is not limited thereto, and two or more guide marks may be included without limitation.

In addition, a user interface 23 configured to receive a control command from a user and display information on an operation of the induction heating apparatus 1 to the user may be provided on one region of the cooking apparatus top plate 20. However, the position of the user interface 23 is not limited to the cooking apparatus top plate 20 and the user interface 23 may also be provided at various positions, such as a front surface and/or a side surface, of the main body 10.

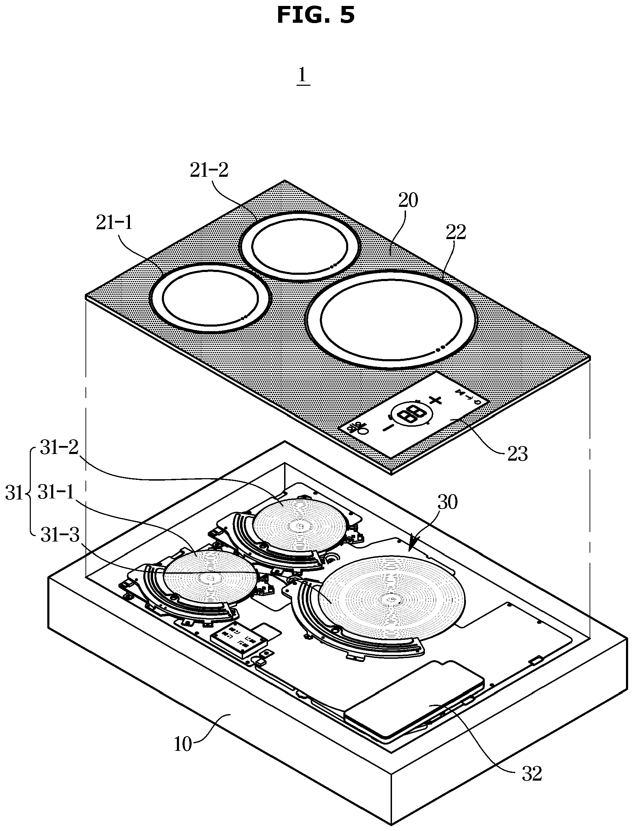

FIG. 5 is a view illustrating a state where a main body is separated from a cooking apparatus top plate in an induction heating apparatus according to an embodiment of the present disclosure.

Referring to FIG. 5, the induction heating apparatus 1 includes a heating layer 30 disposed under the cooking apparatus top plate 20 and including a plurality of induction heating coils 31 (31-1, 31-2, and 31-3), which heat cooking vessels placed on the cooking apparatus top plate 20, and a main assembly 32, which implements the user interface 23 and accommodates various electronic components.

The plurality of induction heating coils 31 are heated by electromagnetic induction to heat cooking vessels placed on the cooking apparatus top plate 20.

The induction heating coil 31 includes a coil wound in a substantially circular shape to generate a magnetic field in a vertical direction by a current applied thereto. The induction heating coil 31 is used as a heat source and disposed under the cooking apparatus top plate 20 to transfer heat to the cooking apparatus top plate 20. A cooking vessel such as a pot is heated by heat transferred to the cooking apparatus top plate 20. Although the induction heating coil 31 is described as a heat source in the present disclosure, an induction heater using an induction heating method or a radiant heater using an electrical resistance method may also be used as a heat source instead of the induction heating coil 31.

In this case, the plurality of induction heating coils 31 may be provided at positions corresponding to the guide marks 21-1, 21-2, and 22, respectively.

Specifically, the plurality of induction heating coils 31 may include one first induction heating coil 31-1, the other first induction heating coil 31-2, and a second induction heating coil 31-3.

Although FIGS. 4 and 5 illustrate two first induction heating coils 31-1 and 31-2 and one second induction heating coil 31-3, the embodiment is not limited thereto. The induction heating apparatus 1 may include at least one first induction heating coil 31-1 and at least one second induction heating coil 31-3.

That is, the numbers of the first induction heating coils 31-1 and 31-2 and the second induction heating coil 31-3 contained in the induction heating apparatus 1 are not limited as long as one or more thereof are used.

Each of the plurality of induction heating coils 31 may generate a magnetic field and/or electromagnetic field for heating a cooking vessel.

For example, a driving current supplied to the induction heating coil 31 may induce a magnetic field around the induction heating coil 31.

Particularly, once a current that changes magnitude and reverses direction over time, i.e., alternating current, is supplied to the induction heating coil 31, a magnetic field whose magnitude and direction vary over time may be induced around the induction heating coil 31.

A magnetic field generated around the induction heating coil 31 may pass through the cooking apparatus top plate 20 formed of a tempered glass and arrive at a cooking vessel placed on the cooking apparatus top plate 20.

An eddy current circulating along a magnetic field may be generated in the cooking vessel by the magnetic field whose magnitude and direction change over time. A phenomenon in which an eddy current is generated by a time-varying magnetic field is referred to as electromagnetic induction. Electrical resistance heat may be generated in the cooking vessel by eddy current. Electrical resistance that is heat generated in a resistor while a current flows in the resistor is also called Joule heat. The cooking vessel is heated by such electrical resistance heat and an object to be cooked contained in the cooking vessel C may be heated.

As described above, each of the plurality of induction heating coils 31 may heat the cooking vessel C by using electromagnetic induction and electrical resistance heat.

Also, the heating layer 30 may be disposed under the user interface 23 provided at one region of the cooking apparatus top plate 20 and include the main assembly 32 configured to implement the user interface 23.

The main assembly 32 may be a printed board assembly (PBA) including a display, a switching element, and an integrated circuit element for implementing the user interface 23 and a printed circuit board (PCB) mounted with these elements.

The position of the main assembly 32 is not limited to that shown in FIG. 4 and the main assembly 32 may be disposed at various positions. For example, in the case where the user interface 23 is mounted on the front surface of the main body 10, the main assembly 32 may be disposed behind the front surface separately from the heating layer 30.

A PCB assembly (not shown) configured to operate the plurality of induction heating coils 31 may be provided under the plurality of induction heating coils 31. The plurality of PCB assemblies may be provided with a driving circuit configured to supply a driving current to the plurality of induction heating coils 31 and a control circuit configured to control the operations of the plurality of induction heating coils 31.

As described above, the induction heating apparatus 1 may include the cooking apparatus top plate 20 having a flat-panel shape on which cooking vessels are placed, a plurality of induction heating coils 31 to heat the cooking vessels, and a driving circuit and a control circuit configured to operate the plurality of induction heating coils 31.

Meanwhile, the above-described induction heating apparatus is merely an example of an apparatus according to an embodiment. That is, the glass ceramic substate provided with the above-described uneven structure may also be applied to the exterior of various types of apparatuses well known in the art as well as the above-described induction heating apparatus, without limitation. Therefore, any apparatus including a glass ceramic substrate provided with the above-described uneven structure as an exterior material may be used as an example of the present disclosure.

According to an embodiment of the present disclosure, provided is an apparatus including a glass ceramic substrate as an exterior material, wherein the glass ceramic substrate includes a chemically strengthened uneven structure on the top surface, and the uneven structure has an average surface roughness Ra of 0.1 to 1.0 µm. The glass ceramic substrate having the above-described uneven structure may be applied as an exterior material of mobile back cover glass or home appliances such as refrigerators due to high surface hardness, and preferably, applied to cooking apparatuses requiring heat resistance such as induction ranges and ovens.

Hereinafter, the present disclosure will be described in more detail with reference to the following examples. However, these examples are made only for illustrative purposes, and the present disclosure is not construed as being limited by those examples.

### [Example]

### Preparation Example 1: Preparation of Glass Ceramic Substate Having Uneven Structure on Surface

As a glass ceramic substrate, lithium aluminosilicate having a β-quartz crystal phase was used.

An uneven structure was formed on the surface of the glass ceramic substrate by blasting using boron carbide and industrial diamonds and in this case an average surface roughness Ra was 0.66 µm.

### Experimental Example 1-1: Comparison of Friction Coefficient According to Presence of Uneven Structure

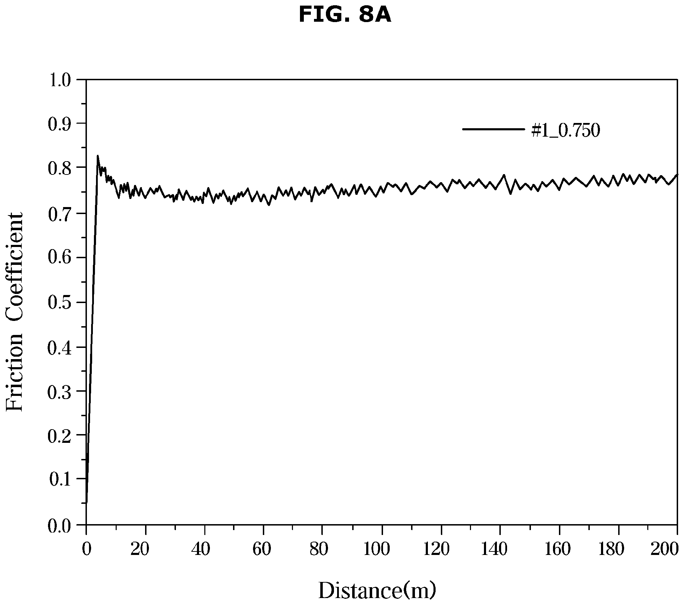

In order to identify effects of the uneven structure on decreasing friction coefficient, friction coefficients of the glass ceramic substrate before forming the uneven structure and friction coefficients of the glass ceramic substrate having the uneven structure according to Preparation Example 1 were measured under loads of 5 N and 2 N, and the results are shown in Table 1 and FIGS. 8A to 9B.

**Table 1**

| Friction coefficient | No uneven structure (Comparative Example 1) | Uneven structure (Preparation Example 1) |
|---|---|---|
| Load of 5 N | 0.750 | 0.580 |
| Load of 2 N | 0.722 | 0.503 |

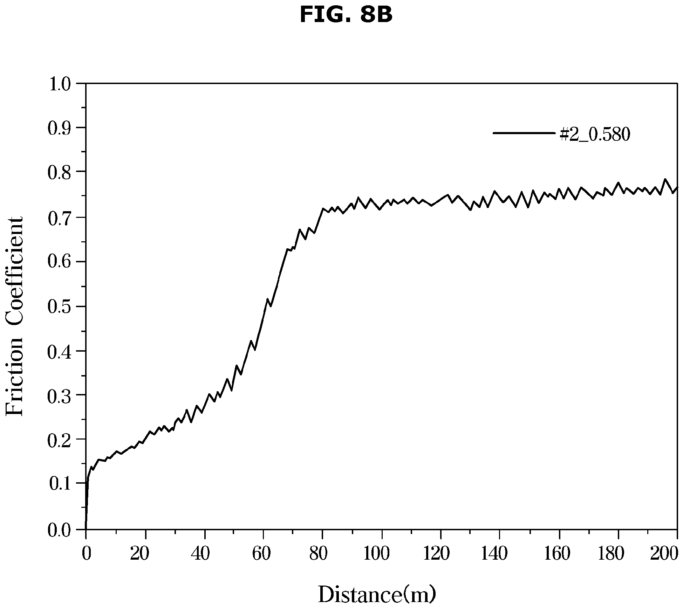

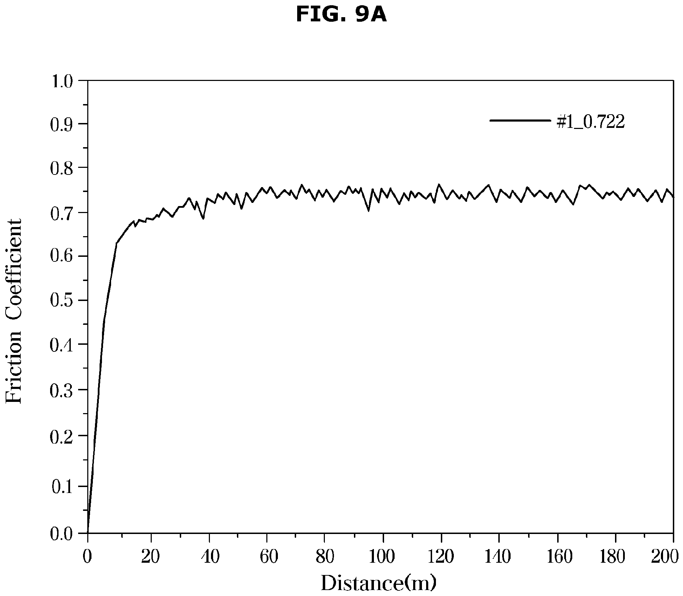

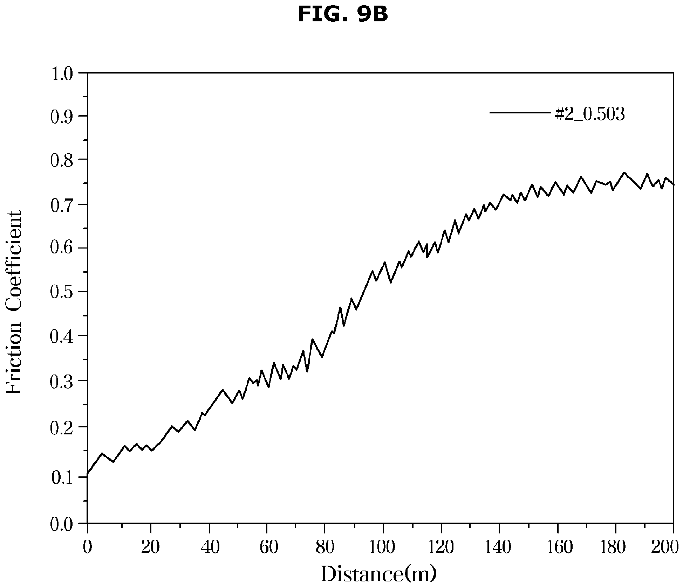

FIGS. 8A and 8B are graphs illustrating friction coefficients of a glass ceramic substrate before forming an uneven structure and a glass ceramic substrate after forming the uneven structure respectively under a load of 5 N. FIGS. 9A and 9B are graphs illustrating friction coefficients of a glass ceramic substrate before forming an uneven structure and a glass ceramic substrate after forming the uneven structure respectively under a load of 2 N.

Referring to Table 1 and FIGS. 8A to 9B, it was confirmed that the friction coefficient decreased by forming the uneven structure with a preset surface roughness on the surface of the glass ceramic substrate based on this experiment. With respect to real touch, it was also confirmed that the substrate of Preparation Example 1 was softer.

### Experimental Example 2-1: Comparison of Scratch Resistance According to Presence of Uneven Structure

In order to identify effects of an uneven structure on improving scratch resistance, a scratch test was performed on the glass ceramic substrate before and after forming the uneven structure according to Preparation Example 1 once to 10 times with a load of 1 kg, and the results are shown in Table 2 below.

### < Evaluation Criteria of Scratch Resistance >

NG: Scratches were visually observed.

OK: Scratches were not visually observed.

**Table 2**

| Example | 1 kg/once | 1 kg/10 times |
|---|---|---|
| No uneven structure (Comparative Example 1) | NG | NG |
| Uneven structure (Preparation Example 1) | OK | OK |

Referring to Table 2, while scratches were visually observed in the glass ceramic substrate before forming the uneven structure, scratches were not visually observed in the glass ceramic substrate of Preparation Example 1 on which the uneven structure. That is, it was confirmed that scratch resistance of the glass ceramic substrate of Preparation Example 1 was improved only by forming the uneven structure before chemical strengthening treatment.

### Preparation Example 2: Chemical Strengthening of Glass Ceramic Substrate

For comparison of strengthening effects of strengthening conditions, the glass ceramic substrate on which the uneven structure was not formed was subjected to chemical strengthening treatment by methods according to Strengthening Conditions 1 to 3 below. Lithium aluminosilicate having β-quartz crystal phase was used as the glass ceramic substrate.
1) Condition 1: The substrate was chemically strengthened in a mixed solution of NaNOs and KNOs in a weight ratio of 64:36 at 400°C for 3 hours (Preparation Example 2-1).
2) Condition 2: The substrate was chemically strengthened in a 100 wt% KNOs solution at 420°C for 20 minutes (Preparation Example 2-2).
3) Condition 3: The substrate was chemically strengthened in a mixed solution of NaNOs and KNOs in a weight ratio of 64:36 at 400°C for 3 hours, and then chemically strengthened in a 100 wt% KNOs solution at 380°C for 20 minutes (Conditions 1+2: Preparation Example 2-3).

### Experimental Example 2: Comparison of Surface Hardness According to Strengthening Condition

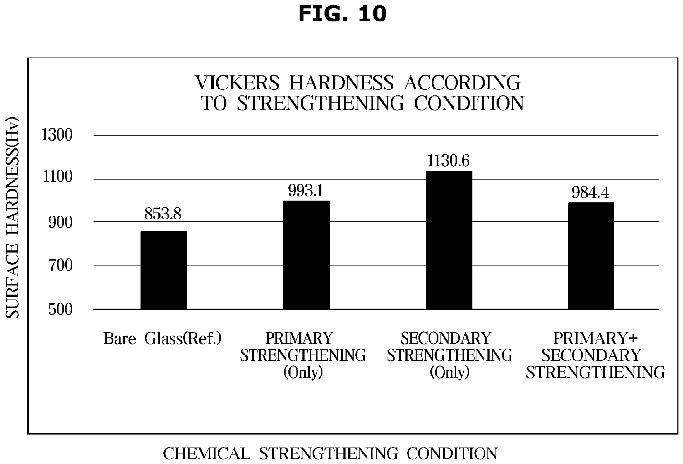

For comparison of surface hardness according to chemical strengthening conditions, Vickers hardness of the glass ceramic substrate before performing chemical strengthening and the substrate chemically strengthened by the methods according to Conditions 1 to 3 in Preparation Example 2 was measured, and the measurement results are shown in in Table 3 below and FIG. 10.

**Table 3**

| Chemical strengthening | Not strengthened (Comparative Example 2) | Condition 1 (Preparation Example 2-1) | Condition 2 (Preparation Example 2-2) | Condition 3 (Preparation Example 2-3) |
|---|---|---|---|---|
| Vickers hardness (Hv) | 853.8 | 993.1 | 1130.6 | 984.4 |

Referring to Table 3 and FIG. 10, it was confirmed that the substrate chemically strengthened in a high-concentration KNOs at a high temperature for a short time according to Condition 2 had the highest surface hardness of 1,000 Hv or more.

### Experimental Example 3: Comparison of Friction Coefficient According to Surface Roughness

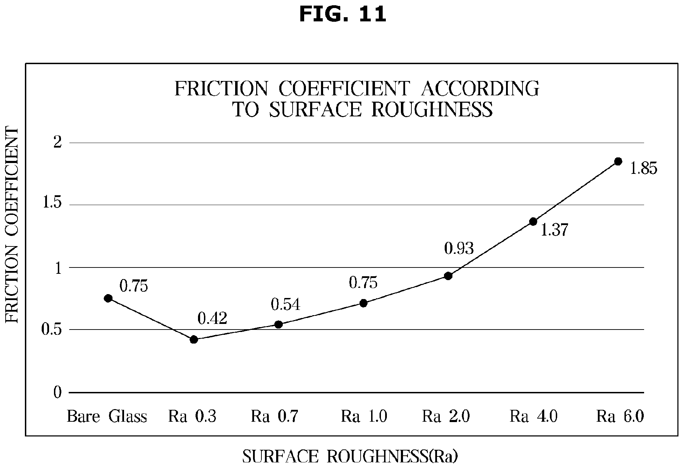

For comparison of friction coefficient according to surface roughness values of the uneven structure, friction coefficients of the glass ceramic substrate were measured before and after forming the uneven structure having different surface roughnesses under a load of 5 N and shown in Table 4 below and FIG. 11.

**Table 4**

| Surface roughness (µm) | No uneven structure (Comparative Example 1) | Ra 0.3 | Ra 0.7 | Ra 1.0 | Ra 2.0 | Ra 4.0 | Ra 6.0 |
|---|---|---|---|---|---|---|---|
| Friction coefficient | 0.75 | 0.42 | 0.54 | 0.71 | 0.93 | 1.37 | 1.85 |

Referring to Table 4 and FIG. 11, it was confirmed that a lowest friction coefficient was obtained at a surface roughness Ra of 0.3 µm, and a friction coefficient similar to that of the glass ceramic substrate before forming the uneven structure was obtained at a surface roughness Ra exceeding 1.0 µm.

### Experimental Example 4: Comparison of Surface Hardness According to Strengthening Time

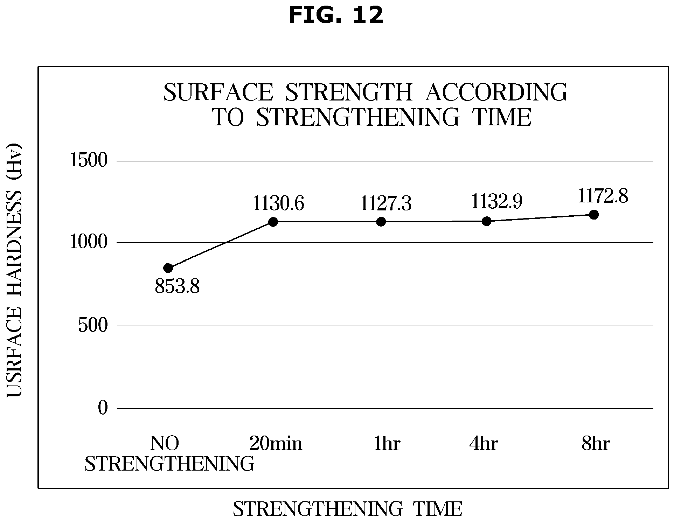

For comparison of surface hardness according to chemical strengthening time, the glass ceramic substrate having the superior effect on improving surface hardness was prepared according to Condition 2 of Preparation Example 2 except that the chemical strengthening time was changed and Vickers hardness thereof was measured, and the results are shown in Table 5 below and FIG. 12.

**Table 5**

| Strengthening time | Not strengthened (Comparative Example 2) | 20 min | 1 hr | 4 hr | 8 hr |
|---|---|---|---|---|---|
| surface hardness (Hv) | 853.8 | 1130.6 | 1127.3 | 1132.9 | 1172.8 |

Referring to Table 5 and FIG. 12, surface hardness was significantly increased by chemical strengthening using KNOs compared to that before chemical strengthening. However, although strengthening time increased, no significant difference was observed in the surface hardness compared to that of chemical strengthening performed for 20 minutes. Therefore, it may be preferable to perform the chemical strengthening for a short time to increase surface strength of the glass ceramic substrate in terms of efficiency and productivity of the process.

The embodiments of the present disclosure have been shown and described above with reference to the accompanying drawings. However, the disclosed embodiments are illustrative and the scope of the present disclosure is not limited thereby. It will be understood by those of ordinary skill in the art that the present disclosure may be easily modified into other detailed forms without changing the technical principle or essential features of the present disclosure.

## Claims

1. A cooking apparatus top plate on which a cooking vessel is placeable to be heated by the cooking apparatus, the top plate comprising:
a glass ceramic substrate having a chemically strengthened top surface that has an uneven structure with an average surface roughness Ra of 0.1 to 1.0 µm.

2. The cooking apparatus top plate according to claim 1, wherein the glass ceramic substrate includes:
lithium aluminosilicate-based crystalline glass including Li₂O, Al₂O₃ and SiO₂ as a basic composition, and
at least one crystal phase selected from β-quartz, β-spodumene, and β-eucryptite crystal phases.

3. The cooking apparatus top plate according to claim 2, wherein the glass ceramic substrate further includes at least one element selected from the group consisting of V, Mg, P, Fe, Ti and Zr.

4. The cooking apparatus top plate according to claim 1, wherein the top surface of the glass ceramic substrate is chemically strengthened by ion exchange with at least one strengthening salt selected from KNOs and NaNOs.

5. The cooking apparatus top plate according to claim 1, wherein the glass ceramic substrate has a Vickers hardness of 950 to 1,200 Hv and a friction coefficient of 0.42 to 0.71.

6. The cooking apparatus top plate according to claim 1, further comprising:
a printed layer under the glass ceramic substrate,
the printed layer including a background printed layer and a shielding printed layer under the background printed layer.

7. A method for processing a glass ceramic substrate, the method comprising:
forming the top surface so as to have an uneven structure having an average surface roughness Ra of 0.1 to 1.0 µm; and
chemically strengthening the top surface having the uneven structure.

8. The method according to claim 7, wherein the glass ceramic substrate includes:
lithium aluminosilicate-based crystalline glass including Li₂O, Al₂O₃ and SiO₂ as a basic composition, and
at least one crystal phase selected from β-quartz, β-spodumene, and β-eucryptite crystal phases.

9. The method according to claim 8, wherein the glass ceramic substrate further includes at least one element selected from the group consisting of V, Mg, P, Fe, Ti, Cr, and Zr.

10. The method according to claim 7, wherein the forming the top surface so as to have the uneven structure is performed by chemical etching, blasting, or a combination thereof.

11. The method according to claim 7, wherein the chemically strengthening is performed by ion exchange with at least one strengthening salt selected from KNOs and NaNOs.

12. The method according to claim 11, wherein the chemically strengthening is performed for 10 to 60 minutes using a KNOs solution having a concentration of 90 to 100 wt% as a strengthening salt.

13. An induction heating apparatus comprising:
a cooking apparatus top plate on which a cooking vessels are placed; and
a plurality of induction heating coils under the cooking apparatus top plate and configured to, with the cooking vessel placed on the top plate, generate magnetic fields to heat the cooking vessel,
wherein the cooking apparatus top plate comprises a glass ceramic substrate with a chemically strengthened uneven structure on the top surface, and the uneven structure has an average surface roughness Ra of 0.1 to 1.0 µm.

14. The induction heating apparatus according to claim 13, wherein the glass ceramic substrate includes:
lithium aluminosilicate-based crystalline glass including Li₂O, Al₂O₃ and SiO₂ as a basic composition, and
at least one crystal phase selected from β-quartz, β-spodumene, and β-eucryptite crystal phases.

15. The induction heating apparatus according to claim 13, wherein the glass ceramic substrate has a Vickers hardness of 950 to 1,200 Hv and a friction coefficient of 0.42 to 0.71.
